# EUROPEAN PATENT APPLICATION

(11) **EP 3 373 165 A1**
(43) Date of publication of application: **12.09.2018**
(21) Application number: 18160580.9
(22) Date of filing: 07.03.2018
(51) Int. Cl.: G06F 17/30

(54) **METHOD OF TRANSFERRING THE STRUCTURES AND DATA SETS BETWEEN THE SOURCE AND TARGET SYSTEMS AND THE SYSTEM TO IMPLEMENT IT**

(30) Priority: 07.03.2017 CZ 20170124
(71) Applicant: Krieg, Jaroslav, 37011 Ceske Budejovice (CZ)
(72) Inventor: KRIEGOVA, Ivana, 37006 Ceske Budejovice (CZ)
(74) Representative: Kratochvil, Vaclav

(57) **Abstract**

The structures and data sets are transferred either directly or via the application server (3). On the side of the source computer system (1), or the application server (3) respectively, a mapping table is created containing definitions of rules for transfer of field values to the target computer system (5), links between individual fields, rules for selecting the values of each field, and possibly the conversion of the values contained in the fields concerned. Directly in the given target computer system (5) the migration object is added or modified by changing the migration object definition structure. This new structure of the migration object is compared with the structures already contained in the mapping table and in case a field is missing or mapping is insufficient, the structure and the mapping table is updated with such field. The requested structure of the new migration object is then accepted, and subsequently the program for data creation stored in the source computer system (1), or in the application server (3) respectively, is always re-generated according to the mapping table so that the structure of the output file corresponds exactly to the structure of the file in the target computer system (5). The generated text file is transferred to the target computer system (5) via a common data repository. All this process is managed by the application section for processing the request for the given migration object and its creation, which is located in the source computer system (1) or in the application server (3). The application section is formed by the block (8) of identification of the processed migration object, block (9) of creation the query for the structure of the migration object, block (10) of the target system initialization, block (14) of recording the current structure of the migration object, block (15) of the mapping data updating, and block (16) of creating the program for loading and processing the data from the source computer system (1) and generating the output file.

## Description

### Background of the Invention

The solution deals with the transfer of structures and data sets between systems that is used to transfer data from the source system to the target system. Based on a request of user of one of the target systems the data from the source system must be extracted in the structure known in the target data set.

### Description of Prior Art

Frequently, there is a need to repeatedly extract a large amount of data from an information system and transfer it to another system, for example, where the old information system is being replaced by a new information system with new enhanced capabilities than those provided by the old system.

In this case, the maximum amount of information stored in the old system, the so-called source system, must be extracted in a specified structure in the form of a sequential file, or in the form of a text file or any data structure. In the context of data extraction, it is necessary to perform due analysis of the data and to set the proper rules to fit the new target system. This is a very demanding and lengthy process where the individual steps must often be repeated due to human mistakes.

On the new target system side, standard input file structures, so-called migrating objects structures or data structures, are set. A migration object is a set of 1 to N data structures where, in the case the data is represented by a single structure, it is also possible to talk about the data structure. The whole process is often called as migration of data from the old system to the new one, it means from the source system to the target system. Creating the data sets or filling the data structures to be imported to the target system always requires to specify a number of parameters such as: the structure of the migration object or the structure changes, the amount of data, the selection criteria...

When transferring the structures and data sets between the source and target systems using the currently known methods, the procedure is as follows. At the beginning of migration or general data transfer, it is necessary to perform so-called mapping of data between the two systems, it means the source and target systems, that is, to determine which data correspond to each other, which data must be transformed or converted and what actions with the data are needed to import the data properly to the target system. Once this mapping is complete, the programmer integrates the individual information into a program. For each migration object or data structure, a program is created and when it is run, the required data set is created or the data structure is filled. Similarly, there is a program on the side of the target system that imports the data to the target system.

On both sides, the programs need to be debugged and partial changes are made step-by-step. Somebody must define these changes on the target system side, add mapping for new data, or modify them with respect to existing data. In order to generate data from the source system for testing, it is necessary to define how much data is to be extracted from the source system and to set the rules for selecting the data for the required set/structure, or to deliver a list of identifiers for the selection of the data. This step is most commonly done at a meeting of technical or IT staff, by telephone or by email. Changes to both systems must always be coordinated, and it is imperative that all changes to the structures are carried out in both systems prior next test and somebody must control the process and monitor it consistently.

After the programs are debugged, usually 3-5 tests are performed, during which data sets are created repeatedly; all data from the source system is transferred to the target system minimum 3 times.

As implied by the above mentioned, the disadvantage of a currently known method is that it is a demanding and relatively complex action that needs to be constantly kept under control to minimize unnecessary work on both sides.

The following documents generally relating to the topic are also known.

US 9201606 B, TAYLOR NEAL [US]; NICKOLOV PETER [US]), 01.12.2015 primarily deals with systems and migration methods exclusively at the level of database tables including field-type transformations and conversion of the fields' content. The solution is based on the principles and tools for implementation of migrations, transfer and conversion of data exclusively at the level of database tables. The disadvantage of this solution is that it is narrowly specialized for data migration, transfer, and transformation exclusively at the levels of database tables and database operating systems, such as SQL. Detailed description and in particular FIG. 4 clearly indicate that the principle of dynamic control of migration structures at the application level, but maximum at the level of databases, is not used. This means that application controls that significantly improve the quality of migrated data are not used during the transfer.

Another document is US 2016357438 A, HORVATIN KEVIN ANTHONY [US]; MOORE STEVEN ALLEN [US]; OBST JONATHAN CAMERON [US], 08.12.2016. This document addresses the migration of a nickname cache between devices when migrating email data, typically Microsoft Outlook/Office products, that is files in PST formats. It is a highly specialized solution for Microsoft products.

Document US 8990527 B, LINSTEAD PAUL [US], 24.03.2015, deals with a tool or rather a principle for control of directions between devices during the data transfer, primarily the transfer of data between smart mobile phones, in the figurative meaning between any kind of devices. The disadvantage of this solution is that it is narrowly specialized for products such as smart mobile phones without the dynamic management of migration structures, that is, all structures are controlled or entered manually.

US 2015019487 A, BUEHNE STEPHAN [DE]; SPIEGELBERGELMAR [DE], 15.01.2015 primarily addresses the principle and control of transfer of the source database changes during data transfer at the database level is real time. Again, this is a narrowly specialized data transfer solution at the database level.

Document US 2017046143 A. KOCHHAR HARMEET [IN]; KHANDELWAL PRASHANT [IN]; KUMAR PAWAN [US]; MITRA SAIKAT [IN], 16.02.2017 deals with a system and data migration method exclusively at the level of database tables, including field type transformations and content conversions. At the same time, the document addresses the tool and the principle of monitoring the data transfer and transformation process at the level of database tables or database objects. It is a narrowly specialized solution for data migration, data transfer and transformation exclusively at the level of database tables and database objects. Even here, the principle of dynamic control of migration structures at the application level, but maximum at the level of databases, is not used. During the transfer, application controls, which would greatly increase the quality of the migrated data, are not used.

The solution according to US 2012278512 A, ALATORRE GABRIEL [US]; RICHARDSON LAURA [US]; SINGH AAMEEK [US]; BECKER BARRY [US]; OLSON JAMES [US], 01.11.2012., is also known. It is a description of tools and principles for scheduling the data transfer at the database level including real-time load management of servers performing the migration during the running data migration process at the database level. It again describes a narrowly specialized solution for scheduling the technical process of data transfer and server load management in real time for/during the data transfer at the database level.

### Summary of the Invention

The drawbacks mentioned above are eliminated by the method of transferring the structures and data sets between the source and target systems and the system to implement it according to the present solution.

When transferring the structures and data sets between the source and the target computer systems, the source system operator manages at least one target computer system, and based on the requirements of the target computer system user for modification the structure or complementing the migration object defined by a set of logically related data including their structure, he modifies the structure of these migration objects. This method involves the step of data mapping. The principle of the new solution is the fact that during the data mapping step a mapping table is created, which contains definition of rules for transferring the field values to the target computer system, links between individual fields, rules for selecting the values of each field, and possibly the conversion of the values contained in the fields concerned. A field is a precisely defined part of a sentence of a text file or data structure with a defined length and type of characters that may be contained in the field. The mapping table can take various forms, whether it is a table in the system or a table in the form of Excel file or just a list of rules in any form. The user complements or modifies the migration object directly in his target computer system by changing the structure of the migration object. This new structure of the migration object is compared with the structures already contained in the mapping table. In case a field is missing or mapping is insufficient, the structure and the mapping table are updated with such new section or this field. The required structure of the new migration object is then accepted, and subsequently the program for data creation stored in the source system is re-generated according to the mapping table so that the structure of the output file from the source system corresponds exactly to the structure of the file in the target computer system. The generated text file or sentence of the structure is transferred to the target computer system via a common data repository or directly online via a direct interface.

In one possible embodiment, all mapping data is entered directly into the source computer system. The request to add or change a migration object or data structure is transferred to this source computer system via an input/output interface from the target computer system. All further steps are implemented in this source computer system.

In another possible embodiment, all mapping data is maintained on the application server, to which the request to add or change a migration object or data structure is transferred via an input/output interface by the target/application server and is stored in the application server along with the parameters for data extraction. All further steps are performed on this application server. Data extraction is performed via the input/output interface by the source system/application server.

For implementation of this method is created a system consisting of the source and target computer systems, which are interconnected by at least one input/output interface. The system further comprises a mutually interconnected section of input of the request for a defined migration object or data structure and its identification that is part of the target computer system, and the application section for processing a request for a specified migration object or data structure and its creation. The section of input of the request for the defined migration object or data structure and its identification consists of the block of input of the request for creating a new text data file or direct transfer of data for the input to the migration object or data structure and their parameters, block of the migration object or data structure identification, block of reading the current structure of the migration object or data structure, and of the block of transfer of the current structure of the requested migration object or data structure. The application section for processing the request for the given migration object or data structure and their creation consists of the block of identification of the processed migration object or data structure, block of creation the query for the structure of the migration object or data structure, block of the target system initialization, block of recording the current structure of the migration object or data structure, block of the mapping data updating, and the block of creating the program for loading and processing the data and generating the output file or direct transfer of the filled-in data structure. Block of input of the request for the required migration object or data structure and their parameters is via the input/output interface connected to the input of the block of identification of the processed migration object or data structure, while its output is via the block of creation the query for the structure of the migration object online connected to the input of the block of the target system initialization. The output of the block of the target system initialization is interconnected back via the input/output interface with the input of the block of the migration object or data structure identification. The output of the block of the migration object or data structure identification is via the block of reading the structure of the new migration object or data structure connected to the input of the block of transfer of the current structure of the new migration object or data structure, the output of which is via the input/output interface connected to the input of the block of recording the current structure of the migration object or data structure. The output of the block of recording the current structure of the migration object or data structure is via the block of the mapping data updating connected to the input of the block of creating the program for loading and processing the data and generating the output file or direct transfer.

In one possible embodiment, the application is a part of the source computer system and it allows for direct queries to the database of the source computer system. Here, the application section for processing the request for given migration object or data structure and their creation is interconnected with the section of input of the request for new migration object and its identification, which is implemented in the target computer system, via the first input/output interface. Considering the great amounts of data, this embodiment is faster.

Another possibility is that between the target and source computer system the application server is inserted. The application section for processing the request for given migration object or data structure and their creation is then a part of this application server. The connection between the application server and the source computer system is implemented by the second input/output interface, via which the programs stored on the application server send queries to the source computer system database. In this case, the application section is interconnected with the section of input of the request for new migration object and its identification implemented in the target pressure system via the third input/output interface.

The advantage of the new method of transferring the structures and data sets or direct transfer between the source and target computer system and the system to implement it is that part of this process is processed automatically, which eliminates human element and thus minimizes many possible errors. Besides this aspect, the complete process is significantly faster.

In contrast to currently known solutions, the present solution allows for dynamic retrieval of object structures from the target computer system to the source computer system. This not only removes manual work with the structures maintenance but mainly it removes manual monitoring of matches between the two systems. The data is always created in a structure that can be processed on the target computer system. The structures are governed by a setup on the target computer system, it means, in one place only, and thus no differences in structures between the two systems occur. Here, the principle of dynamic control of migration structures at the application level is applied.

The programs are processed only once for each migration object and their additional modifications are minimum. The structure of the migration file or data structure for direct transfer is retrieved via the input/output interface whenever data is generated from the structure in the target computer system. Thus, lengthy communication between employees on both sides is eliminated. The data is always created in such a way that it corresponds exactly to the structure in the target computer system at a given moment.

The request for processing itself is the only thing that needs to be communicated between the two parties by telephone or e-mail, because even the parameters can be set on the target computer system and retrieved via the interfaces between the systems.

In both cases, the data is created in a predefined form as a text, it means a sequential file or data structure for direct transfer. It is possible to hand it over on storage media, send them by email, save them on a shared disk or directly fill the target structures via the online interface. Based on the experience and considering the size of migration files, it is best to pass the data over a common data repository that is accessible from both the source and destination computer systems.

The whole method is a significant simplification, clarification and acceleration of the required activity.

### Explanation of Drawings

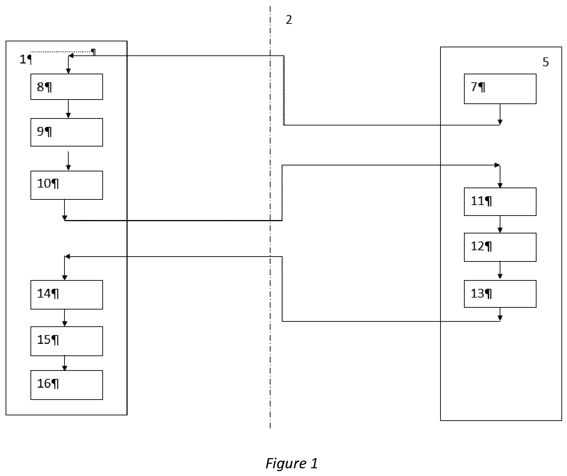

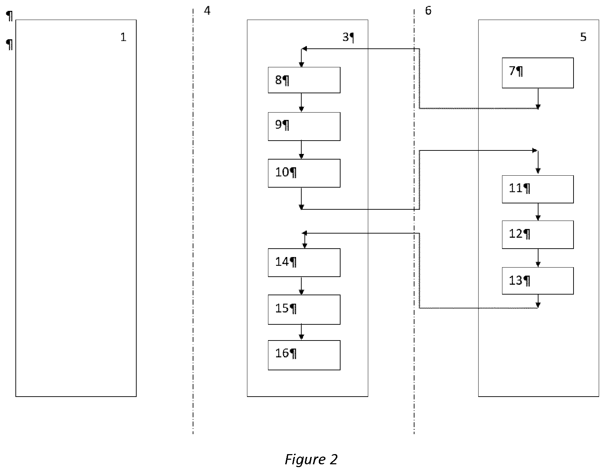

The method of transferring the structures and data sets between the source and target systems and the system to implement it will be further explained by the attached drawings. Fig. 1 shows a block diagram of the system without the application server and Fig. 2 shows a block diagram where the application server is implemented. Data transfer can also be performed directly via an online interface.

### Detailed Description of the Preferred Embodiments

With the new method of transferring the structures and data sets between the source and target systems, as well as with the existing methods, the data mapping process from source to target must be performed at the beginning. Mapping is actually the process, of pairing the fields in the source system to those in the target system. This step includes also rules and links between the fields both in the source computer system, and in the target computer system. However, this mapping is not carried out in relation to the required data but on a general basis, that is, all data from the source computer system is mapped to the target computer system. This so-called mapping is stored in the application's mapping table, from which it is gradually sourced.

At the beginning of the work, migration objects, or the structures of the migration objects, are defined in full scale, regardless of whether all the data will be used. In other words, the source system will compile a list of all fields, rules definitions and links between individual fields, where the field is a precisely defined part of a sentence of a text file with a defined length and type of characters that may be contained in the field, and all are mapped to the target computer system. The result is a mapping table that contains the definitions of rules for transferring field values to the target computer system, the links between individual fields, the rules for selecting the values of the individual fields, and possibly the conversion of the values contained in the fields concerned. If required, the user enters directly in his target computer system a request to add or change the migration object by changing the definition of the migration object structure. This new structure of the migration object is compared with the structures already entered in the mapping table. If the new structure in the map table is not contained or it is mapped insufficiently, this new structure will be added to the mapping table. In the next step, the desired structure of the new migration object is retrieved and subsequently the program for data generation stored in the source computer system is automatically re-generated according to the mapping table so that the output file from the source system corresponds to the file specified by the user in the target computer system. The created text file is transferred to the target computer system via a common data repository or directly into the data structures of the target computer system.

Creating a mapping table and transferring the structures and data sets as such between the source and target computer system can be done in two ways.

The first way is that the mapping table is created in the source computer system, to which the request to add or change the migration object or data structure is transferred through the input/output interface. All further steps are performed in this source computer system.

It is also possible to use arrangement with three servers, with a source computer system, a target computer system, and an application server. In this case, the entire system is implemented on the application server. Both the mapping table and the structure of the migration object or data structure, including extraction programs and all parameters, are maintained on the application server. This means that the mapping table is created in the application server, to which the request to add or change the migration object or data structure is transferred using the first input/output interface between the target computer system and this application server. The mapping table is stored in the application server along with the data extraction parameters. All further steps are performed on this application server. Data extraction is then performed via the second input/output interface between the source computer system and the application server.

Block diagram of the system that provides the procedure without using the application server is shown in Fig. 1.

The system is formed by the source computer system 1 and the target computer system 5. It has two mutually interconnected sections, namely the section of input of the request for the defined migration object online and their identification and the application section. The section of input of the request for the defined migration object or data structure and identification is a part of the target computer system 5. It consists of the block 7 of input of the request for creating a new text data file or direct online transfer of data for the input to the migration object or data structure and online parameters, block 11 of the migration object or data structure identification, block 12 of reading the current structure of the migration object or data structure, and block 13 of transfer of the current structure of the required migration object or data structure. The application section for processing the request for the given migration object or data structure and their creation consists of the block 8 of identification of the processed migration object or data structure, block 9 of creation the query for the structure of the defined online migration object or data structure, block 10 of the target system initialization, block 14 of recording the current structure of the migration object or data structure, block 15 of the mapping data updating, and block 16 of creating the program for loading and processing the data from the source system and generating the output file. Block 7 of input of the request for the required migration object or data structure and its parameters is in this embodiment connected via the first input/output interface 2 to the input of the block 8 of identification of the processed migration object or data structure. Its output is via the block 9 of creation the query for the structure of the migration object connected to the input of the block 10 of the target system initialization. The output of the block 10 of the target system initialization is interconnected back via the first input/output interface 2 with the input of the block 11 of the migration object or data structure identification, the output of which is via the block 12 of reading the current structure of the migration object or data structure connected to the input of the block 13 of transfer of the current structure of the new migration object or data structure. The output of the block 13 of transfer of the current structure of the new migration object online is via the first input/output interface 2 connected to the input of the block 14 of recording the current structure of the migration object or data structure, while its output is via the block 15 of the mapping data updating connected to the input of the block 16 of creating the program for loading and processing the data and generating the output file.

In this embodiment, therefore, the application section is a part of the source computer system 1.

In the embodiment according to the Fig. 2, the application server 3 is inserted between the target computer system 5 and the source computer system 1. In this case, the application section is a part of the application server 3. The connection between the application server 3 and the source computer system 1 is made via the second input/output interface 4. Via this second input/output interface 4 the programs send queries directly to the database in the source computer system 1. The application section is interconnected with the section of input of the request for the new migration object and its identification implemented in the target computer system 5 via the third input/output interface 6. All other blocks are connected analogically as in the example according to the Fig. 1.

The transfer of structures and data sets between the source computer system 1 and the target pressure system 5 is performed via the input/output interface between the systems. Application designed for this transfer may be installed directly in the source computer system 1, as in Fig. 1, and then the transfer of structures and data sets is performed by the first input/output interface 2. Another option is that he application designed for transfers between the source computer system 1 and the target computer system 5 is implemented on a dedicated application server 3, see Fig. 2. In this case, the application server 3 is interconnected with the source computer system 1 via the second input/output interface 4 and with the target computer system 5 via the third input/output interface 6.

The process begins in the block 7 of input of the request for creating a new text data file for the input to the migration object and parameters, where the request for the implementation as such is entered, including the parameters for processing. The first input/output interface 2 according the example in the Fig.1, or the third input/output interface 6 in case the application server 3 is inserted according to the Fig. 2, is initialized and it will perform the transfer of data from the target computer system 5. For processing the request it is necessary to store the information about the request itself, it means the identification of the migration object, information about the requested number of records in the output file, selection criterion for selected records, or possibly the list of requested identifiers. This step is performed in the block 8 of identification of the processed migration object or data structure. It is not important whether the information is entered directly to the system or whether the communication and formulation of the request is verbal or by email. It is simply necessary that somebody on the side of the target computer system 5 formulates the request and then he can either enter it, or communicate it with the representative of the source computer system 1, or the application system in the application server 3 respectively. In the block 9 of creation the query for the structure of the defined migration object or data structure, the request parameters are extracted from it and processed, including the identification of the migration object. The block 9 of creation the query for the structure of the defined migration object or data structure starts the process of obtaining the current structure of the required migration object for creation of data by the block 10 of the target system initialization. In the block 11 of the migration object or data structure identification the object and its structure is identified and this structure is loaded in the block 12 of reading the current structure of the migration object or data structure. For the transfer of the obtained information the input/output interface is again initialized, in the first case it is the first input/output interface 2, in the second case it is the third input/output interface 6, in order to start the transfer of the structure as such in the block 13 of transfer of the current structure of the requested migration object or data structure. The processing continues in the block 14 of recording the current structure of the migration object, where the current structure of the migration object or data structure will be recorded in the application server 3, or in the source computer system 1 respectively. In order to allow for additional features of the processing within the application, it is also necessary to obtain information in the target computer system 5 needed to complement the mapping table, it means to add the name of the source field, the criteria for obtaining the value, and possibly also some modifications by means of recalculation or conversion. This is performed in the block 15 of the mapping data updating. In the last block, the block 16 of creating the program for loading and processing the data from the source computer system 1 and generating the output file, the programmer may adjust the program and then the program for data loading and processing is generated. At this moment, everything is ready for loading the data and creation of the requested file.

Below is a specific example where the client requires the title to be added to the names.

On the source computer system 1, the information about a customer is stored as follows:

| Field name | Field format | Field description |
|---|---|---|
| GIVEN_NAME | char20 | - customer's given name |
| SURNAME | char30 | - customer's surname |
| TITLE | char20, | - customer's title in text format |
| STREET | char30 | - customer's address - name of the street |
| HOUSE_NUMBER | num5 | - customer's address - house number |
| ORIENT_NUMBER | num5 | - customer's address - orientation number |
| CITY | char30 | - customer's address - municipality |
| POSTAL_CODE | char6 | - customer's address - postal code, format '999 99' |

The original request for customer data transfer was as follows:
GIVEN_NAME, SURNAME, STREET, HOUSE_NUMBER, ORIENT_NUMBER, CITY and POSTAL_CODE.

Newly, the file shall be enhanced with the field TITLE, which was identified for transfer.

In the target computer system 5, the structure of the migration object will be enhanced with fields TITLE_L1, TITLE_L2 and TITLE_R as follows:

| Field name | Field format | Field description |
|---|---|---|
| TITLE_L1 | char15 | first title on the left of the name |
| TITLE_L2 | char15 | second title on the left of the name |
| TITLE_R | char15 | title on the right of the name |

The title in the target computer system 5 is not entered as text but according to the defined code list:

| Title | Title code |
|---|---|
| MUDr. | 001 |
| MVDr. | 002 |
| RNDr. | 003 |
| Bac. | 004 |
| Ing. | 005 |
| MUDr. Et Ing. | 006 |
| ... | |

If the currently known process is used, a meeting of persons responsible for the source computer system 1 and the target computer system 5 will take place, where the representative of the target computer system 5 defines a request to add title to the customer's name. Together they will identify the way the title is stored in the source computer system 1 and the procedure how they will operate with the value in the field TITLE so that it can be modified for the needs of the target computer system 5 as follows:

The value in the field TITLE shall be decoded with the relation to the code list. All programs operating with the field TITLE at the source shall be modified to reflect the new request.

With the implementation of the present solution on the opposite only the mapping table will be enhanced with fields TITLE_L1, TITLE_L2 and TITLE_R, and with additional algorithm for the title identification and searching the corresponding values from the delivered code list. The program for data extraction from the source computer system 1 then works with values added to the mapping table after the first re-generation.

### Industrial Applicability

The present solution can be used wherever a large amount of data from an information system needs to be retrieved and transferred to another system, for example where the old information system is replaced by a new information system with new enhanced options than those provided by the old system.

## Claims

1. A method of transferring the structures and data sets between the source and target systems where the operator of the source system manages at least one target computer system, and based on the requests of user of some of the target systems for changing or adding a migration object defined by a set of logically related data including their structure he performs changes of structure of such migration objects where this method includes a step of data mapping **characterized by the fact that** during the data mapping step a mapping table is created, which contains definition of rules for transferring the field values to the target computer system, the links between individual fields, the rules for selecting the values of each field, and possibly the conversion of the values contained in the fields concerned, where a field is a precisely defined part of a sentence of a text file or data structure with a defined length and type of characters that may be contained in the field, and directly in the given target computer system the addition or change of the migration object is performed by changing the definition of the migration object structure, the new structure of the migration object is compared with the structures already contained in the mapping table and in case a field is missing or mapping is insufficient, such field is added to the structure and the mapping table, subsequently the requested structure of the new migration object is accepted and then the program for data creation stored in the source computer system is always re-generated according to the mapping table so that the structure of the output file from the source computer system corresponds exactly to the structure of the file in the target computer system, and the generated text file or data structure is then transferred to the target computer system via a common data repository or directly online via a direct interface.

2. The method according to claim 1 **characterized by the fact that** all mapping data is entered directly into the source computer system, into which the request to add or change a migration object or data structure is transferred via an input/output interface from the target computer system and all further steps are implemented in this source computer system.

3. The method according to claim 1 **characterized by the fact that** all mapping data is maintained on the application server, to which the request to add or change a migration object or data structure is transferred via an input/output interface by the target system/application server and is stored in the application server along with the parameters for data extraction and all further steps are performed on this application server, while data extraction is performed via the input/output interface by the source system/application server.

4. A system for implementation of the method according to claim 1 formed by the source computer system (1) and the target computer system (5) **characterized by the fact that** it comprises the source computer system (1) and the target computer system (5), which are interconnected by at least one input/output interface, and the system further contains a mutually interconnected section of input of the request for a specified migration object or data structure and its identification that is part of the target computer system (5), and the application section for processing the request for a specified migration object or data structure and their creation, where the section of input of the request for the defined migration object or data structure and its identification consists of the block (7) of input of the request for creating a new text file with online data for the input to the migration object or data structure and their parameters, block (11) of the migration object online identification, block (12) of reading the current structure of the migration object or data structure, and block (13) of transfer of the current structure of the requested migration object or data structure, and where the application section for processing the request for the given migration object or data structure and their creation consists of the block (8) of identification of the processed migration object or data structure, block (9) of creation the query for the structure of the defined migration object or data structure, block (10) of the target system initialization, block (14) of recording the current structure of the migration object or data structure, block (15) of the mapping data updating, and block (16) of creating the program for loading and processing the data and generating the output file or direct transfer of filled data structure, while the block (7) of input of the request for the requested migration object or data structure and their parameters is via first input/output interface connected to the input of the block (8) of identification of the processed migration object or data structure, the output of which is via the block (9) of creation the query for the structure of the migration object or data structure connected to the input of the block (10) of the target system initialization, while its output is interconnected back via the input/output interface with the input of the block (11) of the new migration object or data structure identification, the output of which is via the block (12) of reading the current structure of the new migration object or data structure connected to the input of the block (13) of transfer of the current structure of the new migration object or data structure, while its output is via the input/output interface connected to the input of the block (14) of recording the current structure of the migration object or data structure, the output of which is via the block (15) of the mapping data updating connected to the input of the block (16) of creating the program for loading and processing the data and generating the output file.

5. The system according to claim 4 **characterized by the fact that** the application section for processing the request for given migration object or data structure and their creation is a part of the source computer system (1) and it is connected to the section of input of the request for the new migration object and its identification implemented in the target computer system (5) via the first input/output interface (2).

6. The system according to claim 4 **characterized by the fact that** the application server (3) is inserted between the target computer system (5) and the source computer system (1), and the application section for processing the request for given migration object or data structure and their creation is a part of the application server (3), while the connection between the application server (3) and the source computer system (1) is made via the second input/output interface (4), by means of which the programs send queries directly to the database in the source computer system (1), and the application section for processing the request for given migration object or data structure and their creation is interconnected with the section of input of the request for the new migration object and its identification implemented in the target computer system (5) via the third input/output interface (6).
